(19) Europäisches Patentamt
European Patent Office
Office européen des brevets

(11) **EP 2 244 227 B1**

(12) **EUROPÄISCHE PATENTSCHRIFT**

(45) Veröffentlichungstag und Bekanntmachung des Hinweises auf die Patenterteilung:
**22.07.2015  Patentblatt 2015/30**

(51) Int Cl.:
***G06T 7/00*** *(2006.01)*   ***G06K 9/62*** *(2006.01)*

(21) Anmeldenummer: **09450221.8**

(22) Anmeldetag: **23.11.2009**

(54) **Verfahren zur Bestimmung von als Passpunkt einsetzbaren Bildausschnitten eines Masterbildes**

Method for determining sections of a master image which can be used as a control point

Procédé de détermination de fragments d'images d'une image maître insérables en tant que point d'ajustage

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **22.04.2009  AT 6192009**

(43) Veröffentlichungstag der Anmeldung:
**27.10.2010  Patentblatt 2010/43**

(73) Patentinhaber: **AIT Austrian Institute of Technology GmbH**
**1220 Wien (AT)**

(72) Erfinder: **Penz, Harald, Dr.**
**1120 Wien (AT)**

(74) Vertreter: **Wildhack & Jellinek Patentanwälte**
**Landstraßer Hauptstraße 50**
**1030 Wien (AT)**

(56) Entgegenhaltungen:
**EP-A1- 1 626 270     EP-A2- 0 128 820**
**EP-A2- 0 610 871**

- **BONMASSAR ET AL: "Improved cross-correlation for template matching on the Laplacian pyramid", PATTERN RECOGNITION LETTERS, ELSEVIER, AMSTERDAM, NL, Bd. 19, Nr. 8, 1. Juni 1998 (1998-06-01), Seiten 765-770, XP005222128, ISSN: 0167-8655, DOI: 10.1016/S0167-8655(98)00056-7**
- **TSAI D-M ET AL: "Fast normalized cross correlation for defect detection", PATTERN RECOGNITION LETTERS, ELSEVIER, AMSTERDAM, NL, Bd. 24, Nr. 15, 1. November 2003 (2003-11-01), Seiten 2625-2631, XP004443628, ISSN: 0167-8655, DOI: 10.1016/S0167-8655(03)00106-5**

**Beschreibung**

Die Erfindung betrifft ein Verfahren zur Bestimmung von Passpunkten gemäß dem Oberbegriff des Patentanspruches 1.

Ein solches Verfahren ist z.B. aus der EP0128820 bekannt.

Für die automatisierte optische Qualitätskontrolle von in Serie hergestellten Objekten wie z.B. Banknoten, Briefmarken, Druckwerken besteht der Bedarf, das aufgenommene Bild des zu inspizierenden Objekts mit einer Vorlage - auch Masterbild genannt - für einen Vergleich möglichst gut zur Deckung zu bringen. Bei der Vorlage kann es sich auch um ein computergeneriertes Bild aus Entwurfsdaten handeln. In diesem Fall wird für die Entzerrung des aufgenommenen Bildes zumeist der Begriff Bild-Rektifizierung verwendet. Alternativ kann es sich bei der Vorlage auch um ein zuvor aufgenommenes Bild eines für gut befundenen Objekts handeln. Dann wird für den Vorgang zumeist der Begriff Bild-Registrierung verwendet.

Durch optische, mechanische, thermische und andere Einflüsse können die zu prüfenden Aufnahmen verzerrt sein. Die Qualitätskontrolle hängt im hohen Ausmaß davon ab, wie gut die Rektifizierung bzw. Registrierung gelingt.

Für die Rektifizierung bzw. Registrierung in automatischen Prüfsystemen werden üblicherweise Passpunkte verwendet. Darunter versteht man markante Bildbereiche bzw. Bildausschnitte, z.B. die Ecken einer Banknote. Bei jedem zu prüfenden Bild wird automatisiert versucht, diese Passpunkt-Bildausschnitte wiederzufinden, indem sie an mehreren Stellen mit den zughörigen Bildausschnitten des Prüfbildes korreliert werden. Für jeden Passpunkt gilt die Stelle mit dem jeweils besten Korrelationsergebnis (höchste Übereinstimmung) als die gesuchte Position. Je mehr Passpunkte verwendet werden, desto genauer wird im Allgemeinen die Rektifizierung bzw. Registrierung.

Eine manuelle Auswahl von geeigneten Passpunkten ist speziell bei einer hohen Anzahl eine aufwändige und nicht einfache Tätigkeit. Die vorliegende Erfindung betrifft ein Verfahren, mit dem solche Passpunkte bzw. Bildausschnitte aus einem Masterbild ausgesucht werden können.

Ob sich ein Bildausschnitt als Passpunkt eignet, ist nicht einfach zu beantworten. Prinzipiell ist klar, dass der Bildausschnitt kontrastreich sein sollte. Das alleine ist aber nicht ausreichend, da z.B. eine Schraffur - also parallele Linien - keinen geeigneten Passpunkt abgibt. Das liegt daran, dass quer zur Schraffur zwar eine genaue Positionierung möglich ist, aber längs der Schraffur nicht.

Bekannte Verfahren zur Auswahl von Passpunkten beruhen meist auf sogenannten Interest-Operatoren wie z.B. Harris Corner Detector. Hierbei wird meist in den vier Hauptrichtungen (horizontal, vertikal und in beiden Diagonalen) das Verhalten eines Bildausschnittes untersucht. Dabei kann zwar die Größe des Bildausschnittes beliebig gesetzt werden, aber die Größe des Suchbereichs über das Masterbild bleibt unberücksichtigt. Das kann zu Problemen führen. Buchstaben und Ziffern z.B. eignen sich im Allgemeinen gut als Passpunkte, allerdings nur dann, wenn der Suchbereich nicht so groß ist, dass das gleiche Zeichen mehrmals vorkommen kann. Es hängt natürlich auch von der Vorlage ab, ob das Zeichen überhaupt mehrmals vorkommt. Auch die Wahl der Korrelationsfunktion, also das Ähnlichkeitsmaß, mit dem der Passpunkt später in den aufgenommenen Bildern gesucht werden soll, wird nicht berücksichtigt.

Die Größe der Bildausschnitte und der Suchbereiche, sowie die Korrelationsfunktion hängen von der konkreten Anwendung ab und werden für den speziellen Fall vorgegeben. Geeignete Werte hängen davon ab, wie stark die geprüften Aufnahmen bzw. Gegenstände vom Masterbild abweichen können, welche Geschwindigkeiten erreicht werden sollen, wie genau und robust das Verfahren sein soll, usw.

Als Korrelationsfunktion kann z.B. die normierte Kreuzkorrelation verwendet werden. Für zwei gleich große Bildausschnitte $A = \{a_1,...,a_n\}$ und $B = \{b_1,...,b_n\}$, wobei $a_i$ und $b_i$ die Pixelwerte betreffend Intensitäten sind, ist die normierte Kreuzkorrelation NCC (**N**ormalized **C**ross **C**orrelation) definiert durch

$$f_{\mathrm{NCC}}(A,B) = \frac{\sum_{i=1}^{n} a_i b_i}{\sqrt{\sum_{i=1}^{n} a_i^2 \sum_{i=1}^{n} b_i^2}} \ .$$

Wenn $\overline{a} = \dfrac{1}{n}\sum_{i=1}^{n} a_i$ und $\overline{b} = \dfrac{1}{n}\sum_{i=1}^{n} b_i$ die Mittelwerte der Intensitäten der Bildpunkte der Bildausschnitte bezeichnen, dann ist die normierte Kreuzkorrelation mit zusätzlich auf Null normierten Mittelwerten ZNCC (**Z**ero mean **N**omalized **C**ross **C**orrelation) definiert durch

$$f_{\mathrm{ZNCC}}(A,B) = \frac{\sum_{i=1}^{n}(a_i - \overline{a})(b_i - \overline{b})}{\sqrt{\sum_{i=1}^{n}(a_i - \overline{a})^2 \sum_{i=1}^{n}(b_i - \overline{b})^2}} \; .$$

Sowohl bei NCC als auch bei ZNCC bedeuten höhere Werte eine höhere Übereinstimmung. Der Höchstwert 1 bedeutet bei NCC, dass die beiden Bildausschnitte bis auf eine multiplikative Konstante gleich sind und bei ZNCC, dass die beiden Bildausschnitte bis auf eine multiplikative und eine additive Konstante gleich sind, also $A=kB+d$, wobei $d$ eine beliebige und $k$ eine positive Konstante ist.

Eine Korrelationsfunktion von Hans P. Moravec ist definiert durch

$$f_{\mathrm{Mor}}(A,B) = \frac{2\sum_{i=1}^{n}(a_i - \overline{a})(b_i - \overline{b})}{\sum_{i=1}^{n}(a_i - \overline{a})^2 + \sum_{i=1}^{n}(b_i - \overline{b})^2}$$

Neben diesen "klassischen" Korrelationsfunktionen gibt es noch solche, die nicht die Korrelation - also die Übereinstimmung - messen, sondern die Unterschiede berechnen. Diese können als Fehlermaße angesehen werden. Bei diesen Fehlermaßen bedeutet der Wert 0, dass kein Fehler vorliegt und damit perfekte Übereinstimmung der beiden zu vergleichenden Bildausschnitte vorliegt.

Bekannte Fehlermaße sind z.B. die Summe der quadratischen Differenzen SSD (**S**um of **S**quard **D**ifferences), definiert durch

$$f_{\mathrm{SSD}}(A,B) = \sum_{i=1}^{n}(a_i - b_i)^2 \; ,$$

die Summe der absoluten Differenzen SAD (**S**um of **A**bsolute **D**ifferences), definiert durch

$$f_{\mathrm{SAD}}(A,B) = \sum_{i=1}^{n}\left|a_i - b_i\right|$$

und die Summe der auf Null normierten quadratischen Differenzen ZSSD (**Z**ero mean **S**um of **S**quard **D**ifferences), definiert durch

$$f_{\mathrm{ZSSD}}(A,B) = \sum_{i=1}^{n}\left((a_i - \overline{a}) - (b_i - \overline{b})\right)^2 \; .$$

Ein weiteres Fehlermaß von Pascal Fua ist definiert durch

$$f_{\mathrm{Fua}}(A,B) = \frac{\sum_{i=1}^{n}\left((a_i - \overline{a}) - (b_i - \overline{b})\right)^2}{\sqrt{\sum_{i=1}^{n}(a_i - \overline{a})^2 \sum_{i=1}^{n}(b_i - \overline{b})^2}} \; .$$

Passpunkte bzw. als Passpunkte geeignete Bildausschnitte des Masterbildes werden erfindungsgemäß mit den im Kennzeichen des Anspruches 1 angeführten Merkmalen bestimmt.

Mit dem erfindungsgemäßen Verfahren wird untersucht, wie sich die Master-Bildausschnitte verhalten, wenn man mit ihnen als Ausgangsbildabschnitt das Masterbild absucht, d.h. den jeweiligen Ausgangsbildausschnitt mit verschiedenen anderen Bildausschnitten des Masters korreliert. Jeder zu beurteilende Bildausschnitt des Masterbildes wird als Ausgangsbildausschnitt an eine vorgegebene Anzahl von unterschiedlichen Stellen des Masterbildes verschoben und der jeweilige Korrelationswert des verschobenen Ausgangsbildabschnitts mit dem jeweiligen Bildausschnitt an der jeweiligen Stelle berechnet.

Welche Verschiebungsvektoren dabei zur Anwendung kommen, d.h. welche Größe, Richtung und Anzahl der Verschiebungsvektoren vorgegeben wird, hängt vom Suchbereich ab, für den der Passpunkt später, d.h. bei der Bildbeurteilung, zur Anwendung kommen soll. Je größer der Suchbereich ist, desto mehr und auch längere Verschiebungsvektoren sollten eingesetzt und die damit festgelegten Bildausschnitte untersucht werden.

Zweckmäßig ist es, wenn die Länge der Verschiebungsvektoren nach unten begrenzt wird, wobei die Mindestlänge eines Verschiebungsvektors vorzugsweise zwei Pixel beträgt. Es wird jedem Ausgangsbildausschnitt eine Gruppe von Verschiebungsvektoren zugeordnet. Um vergleichbare Ergebnisse zu erhalten, ist es von Vorteil, wenn die Verschiebungsvektoren, die den einzelnen Ausgangsbildausschnitten zugeordnet bzw. auf diese angewendet werden, immer dieselben sind.

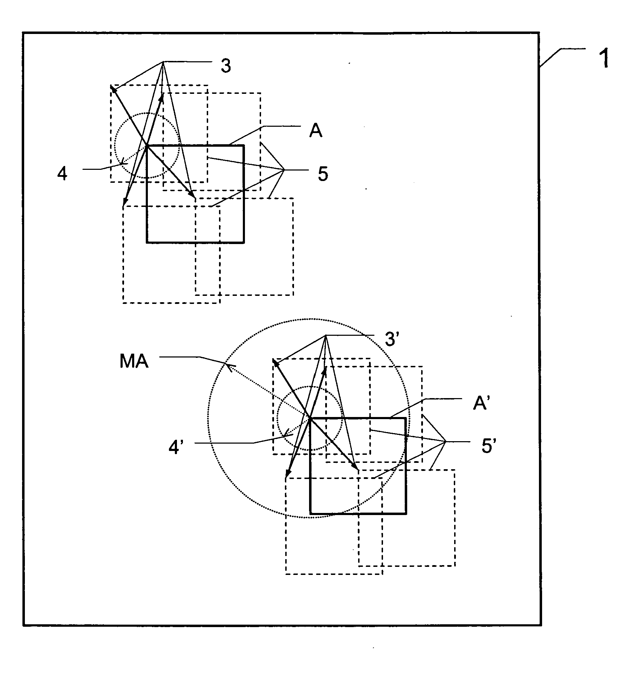

Anhand der Zeichnung wird das erfindungsgemäße Verfahren näher erläutert. Auf einen Ausgangsbildausschnitt A wird eine Anzahl von Verschiebungsvektoren 3 angewendet und dieser Ausgangsbildausschnitt A damit im Masterbild 1 an die entsprechende Anzahl von Positionen 5 verschoben und mit den jeweiligen Bildausschnitten des Masterbildes 1 an diesen Positionen 5 verglichen, d.h. korreliert.

Für die Bewertung eines Master-Bildausschnittes $A$ wird der maximale Korrelationswert $c_{max}(A)$, der bei Anwendung der Verschiebungsvektoren 3 erhalten wird, ermittelt. Der Wert sollte möglichst klein sein, denn ein hoher Wert bedeutet, dass ein ähnlich aussehender Bildausschnitt existiert, mit dem der zu bewertende Master-Bildausschnitt $A$ unerwünschterweise verwechselt werden könnte.

Für eine zufriedenstellende Beurteilung ist unter Umständen der maximale Korrelationswert $c_{max}(A)$ alleine als Bewertung nicht ausreichend. Es sollte auch die Bildintensität, also die Pixelwerte des zu bewertenden Master-Bildausschnittes $A$ berücksichtigt werden. Untersuchungen ergaben, dass für die Korrelationsfunktion NCC die Funktion

$$Q_{\mathrm{NCC}}(A) = (1 - c_{\mathrm{max}}{}^2(A))\sum_{i=1}^{n} a_i^2$$

und für die Korrelationsfunktion ZNCC die Funktion

$$Q_{\mathrm{ZNCC}}(A) = (1 - c_{\mathrm{max}}{}^2(A))\left( n\sum_{i=1}^{n} a_i^2 - \left(\sum_{i=1}^{n} a_i\right)^2 \right)$$

gute Qualifikationsmaße, also Maße zur Beurteilung der Eignung eines Master-Bildausschnittes $A$ als Passpunkt, sind. Höhere Werte bedeuten eine bessere Eignung als Passpunkt.

Für die Korrelationsfunktion nach Moravec ist

$$Q_{\mathrm{Mor}}(A) = (1 - c_{\mathrm{max}}(A))\left( n\sum_{i=1}^{n} a_i^2 - \left(\sum_{i=1}^{n} a_i\right)^2 \right)$$

ein gutes Qualifikationsmaß.

Wenn statt einer Korrelationsfunktion ein Fehlermaß verwendet wird, dann muss statt des größten Korrelationswertes $c_{max}(A)$ der kleinste Fehlerwert $c_{min}(A)$, der bei Anwendung der Verschiebungsvektoren 3 erhalten wird, verwendet werden.

Für die Fehlermaße SSD, SAD und ZSSD reicht $c_{min}(A)$ als Qualifikationsmaß aus, also

$$Q_{\mathrm{SSD}}(A) = Q_{\mathrm{SAD}}(A) = Q_{\mathrm{ZSSD}}(A) = c_{\mathrm{min}}(A).$$

Für das Fehlermaß nach Fua ist als Qualifikationsmaß

$$Q_{\text{Fua}}(A) = c_{\min}(A)) \left( n \sum_{i=1}^{n} a_i^2 - \left( \sum_{i=1}^{n} a_i \right)^2 \right)^2$$

geeignet.

Die Qualifikationsmaße sind immer so beschaffen, dass höhere Werte eine bessere Eignung des Master-Bildausschnittes $A$ als Passpunkt bedeuten. Es werden die Bildinhalte, also die Pixelwerte $a_i$ beurteilt. Die angeführten Qualifikationsmaße sind nicht geeignet, um Werte von verschiedenen Qualifikationsmaßen und/oder von Master-Bildausschnitten mit verschieden großer Pixelanzahl miteinander zu vergleichen. Auch die angewendeten Verschiebungsvektoren sollten für den Vergleich von zwei Qualifikationsmaßwerten dieselben sein.

Für die Rektifizierung bzw. Registrierung von Bildern werden Passpunkte benötigt, die möglichst gut bzw. gleichmäßig über das Bild verteilt sind. Daher ist es im Allgemeinen wenig sinnvoll, einfach nur die gewünschte Anzahl der besten Bildausschnitte des Masterbildes zu nehmen, weil diese z.B. alle nur in einer Bildhälfte konzentriert sein könnten. Ein mögliches Verfahren für die Lösung dieses Problems ist es, mit jenem Bildausschnitt des Masterbildes 1 zu beginnen, der den höchste Qualifikationsmaßwert aufweist und alle Bildausschnitte des Masterbildes zu verwerfen, die innerhalb eines vorgegebenen Mindestabstands MA zu diesem ausgewählten Bildausschnitt liegen. Von den verbleibenden Bildausschnitten wird dann wieder der Bildausschnitt mit dem höchsten Qualifikationsmaßwert ausgewählt. All jene Bildausschnitte, die zu diesem zweiten Bildausschnitt innerhalb des vorgegebenen Mindestabstands liegen, werden wiederum verworfen. Das Verfahren wird so lange fortgesetzt, bis die gewünschte Anzahl von Bildausschnitten ausgewählt wurde oder keine Bildausschnitte übrig sind oder die übrig gebliebenen Bildausschnitte einen vorgegebenen Mindestqualifikationsmaßwert nicht erreichen.

Bei diesem Selektionsverfahren kann es schwierig sein, vorher einen geeigneten Mindestabstand festzulegen. Wählt man ihn zu klein, läuft man Gefahr die gewünschte Anzahl von Bildausschnitten ausgewählt zu haben, bevor durch das Verfahren eine gleichmäßige Verteilung erreicht wird. Wählt man ihn zu groß, bricht das Verfahren mangels verbleibender Kandidaten ab, bevor die gewünschte Anzahl an ausgewählten Bildausschnitten erreicht ist. Deshalb kann es besser sein, von den jeweils verbleibenden Bildausschnitten jenen auszuwählen, der den größten Abstand zu allen bereits ausgewählten Master-Bildausschnitten hat, wobei aber ein vorgegebener Mindestqualifikationsmaßwert eingehalten wird.

Diese zweite Vorgangsweise für die Auswahl von Passpunktbereichen führt zwar zu einer sehr gut verteilten Auswahl, berücksichtigt aber das Qualifikationsmaß zu wenig. Deshalb ist es vorteilhaft, die beiden Vorgangsweisen für die Auswahl von Bildausschnitten des Masterbildes zu verbinden. Als jeweils nächster Bildausschnitt wird jener ausgewählt, dessen Produkt aus Qualifikationsmaßwert und Abstand zum nächstliegenden bereits ausgewählten Bildausschnitt maximal ist. Je nach Anforderung kann auch eine andere Funktion als die Multiplikation gewählt werden. Z.B. kann ein gewichteter Mittelwert zwischen dem Qualifikationsmaßwert und dem Abstand gebildet werden.

Durch die bereits erwähnte Einführung eines minimalen Qualifikationsmaßwertes, wird die Anzahl der in Frage kommenden Bildausschnitte des Masterbildes auf einfache Weise frühzeitig reduziert und so das Verfahren beschleunigt. Eine weitere Möglichkeit zur Beschleunigung ist es, die Bildausschnitte des Masterbildes in disjunkte Teilmengen - vorzugweise in quadratische Bildteile - zu gliedern und aus jeder Teilmenge nur den Bildausschnitt mit dem höchsten Qualifikationsmaßwert zu nehmen. Dadurch wird die Anzahl der in Frage kommenden Bildausschnitte reduziert und so das Verfahren beschleunigt.

Vorzugsweise werden die Qualifikationsmaßwerte für alle möglichen vorzugsweise rechteckigen Bildausschnitte der vorgegebenen Größe berechnet, sofern am Rand noch genügend Platz ist, um die Verschiebungen für die Berechnung von $c_{\max}(A)$ bzw. $c_{\min}(A)$ unterzubringen. Bei rechteckigen Bildausschnitten kann dann der Umstand ausgenutzt werden, dass diese mit ihren nur um 1 Pixel versetzten benachbarten Bildausschnitten große Überlappungen aufweisen. Dadurch müssen die für die Berechnung der Korrelationsfunktion benötigen Summen nicht vollständig neu berechnet werden, sondern können mit wenig Rechenaufwand aus den bereits berechneten Werten eines benachbarten Bildausschnittes ermittelt werden.

Eine vorteilhafte Beschleunigungsmöglichkeit besteht darin, die Berechnung der Qualifikationsmaßwerte zuerst auf einem verkleinerten Masterbild durchzuführen. Die untersuchten Bildausschnitte und Suchbereiche werden dabei um den gleichen Faktor reduziert, um den das Masterbild verkleinert wurde. So können schnell ungeeignete Stellen verworfen werden. Nur für die interessanten Stellen, also Bildausschnitte, für die der Qualifikationsmaßwert bei dem verkleinerten Masterbild groß ist, werden dann auch für das ursprüngliche Masterbild die Qualifikationsmaßwerte berechnet bzw. nur für diese wird das Verfahren fortgesetzt.

Unter Passpunkten werden Bildausschnitte von wählbarer Größe verstanden, die eine Mehrzahl von Bildpunkten bzw. Pixel umfassen, z.B. rechteckige oder quadratische Bereiche mit Kantenlängen von 5 bis 20 Pixel. Es kann vorgesehen werden, dass als Ausgangsbildausschnitt ein rechteckiger Eckenbereich eines rechteckigen Masterbildes gewählt wird. Zur Ermittlung bzw. Vergeben von Anfangsbildausschnitten im Masterbild, auf die die Verschiebungsvektoren angewendet werden, kann ein vorgegebener Ausgangsbildausschnitt A in jede mögliche Richtung im Masterbild, das heißt in horizontale, vertikale und/oder diagonale Richtung, verschoben werden und der erhaltene Bereich wird als weiterer Ausgangsbildausschnitt A herangezogen.

**Patentansprüche**

1. Verfahren zur Bestimmung von als Passpunkt einsetzbaren Bildausschnitten eines Masterbildes (1), das als Vorlage bei der Prüfung von Gegenständen eingesetzt wird,

> a) wobei im Masterbild (1) Ausgangsbildausschnitte (A) vorgegeben werden,
> b) wobei den Ausgangsbildausschnitten (A) vorgegebene Verschiebungsvektoren (3) zugeordnet werden, mit denen diese Bildausschnitte über das Masterbild (1) in eine jeweils der Anzahl der Verschiebungsvektoren (3) entsprechende Anzahl von Positionen (5) verschoben werden,
> c) wobei für jeden Ausgangsbildausschnitt (A) in jeder der Positionen (5) mit einem vorgegebenen Korrelationsmaß oder Fehlermaß der Korrelationsmaßwert bzw. Fehlermaßwert zwischen dem Ausgangsbildausschnitt (A) und dem sich an dieser Position (5) befindlichen, vorteilhafterweise gleich groß gewählten, Bildausschnitt des Masterbildes (1) ermittelt wird, und
> d) wobei für jeden Ausgangsbildausschnitt (A) der maximale Korrelationsmaßwert $c_{max}(A)$ oder der minimale Fehlerwert $c_{min}(A)$ bezüglich der Bildbereiche des Masterbildes (1), über die der Ausgangsbildbereich (A) verschoben wurde, berechnet wird, **dadurch gekennzeichnet,**
> e) **dass** ein Qualifikationsmaßwert festgelegt wird durch Verknüpfung
>
> > - des minimalen Fehlerwertes $c_{min}(A)$ oder eines vom maximalen Korrelationsmaßwert $c_{max}(A)$ abgeleiteten Wertes $1 - c_{max}(A)$ oder $1 - c^2_{max}(A)$
> > mit einem basierend auf den Intensitätswerten der Bildpunkte des jeweiligen Ausgangsbildabschnitts (A) des Masterbilds ermittelten und die Bildintensität angebenden Intensitätswert und
>
> f) **dass** der Ausgangsbildausschnitt (A) als ein zur Prüfung von Gegenständen geeigneter Passpunkt des Masterbildes (1) angesehen wird, wenn der Qualifikationsmaßwert einen vorgegebenen Mindestwert übersteigt.

2. Verfahren nach Anspruch 1, **dadurch gekennzeichnet,**

> - **dass** als Ausgangsbildausschnitte (A) rechteckige Bildausschnitte mit vorgegebener Höhe und Breite gewählt werden.

3. Verfahren nach Anspruch 1 oder 2, **dadurch gekennzeichnet,**

> - **dass** die Verschiebungsvektoren (3), die den einzelnen Anfangsbildausschnitten (A) zugeordnet werden bzw. auf diese angewendet werden, gleich sind.

4. Verfahren nach einem der Ansprüche 1 bis 3, **dadurch gekennzeichnet,**

> - **dass** die Verschiebungsvektoren (3) eine vorgegebene Mindestlänge (4) haben und diese Mindestlänge (4) zwei Pixel beträgt.

5. Verfahren nach einem der Ansprüche 1 bis 4, **dadurch gekennzeichnet,**

> - **dass** bei der Bestimmung des Qualifikationsmaßwertes
> - der minimale Fehlerwert $1 - c_{max}(A)$ oder ein vom maximalen Korrelationsmaßwert $c_{max}(A)$ abgeleiteter Wert $1 - c_{max}(A)$ oder $1 - c^2_{max}(A)$
> - mit der Summe der Intensitätswerte oder der Summe der quadrierten Intensitätswerte der Bildpunkte des Ausgangsbildausschnittes des Masterbildes multipliziert wird.

6. Verfahren nach einem der Ansprüche 1 bis 5, **dadurch gekennzeichnet,**

> - **dass** als Korrelationsmaß eine normierte Kreuzkorrelation verwendet wird gemäß der Formel

$$f_{\text{NCC}}(A,B) = \frac{\sum_{i=1}^{n} a_i b_i}{\sqrt{\sum_{i=1}^{n} a_i^2 \sum_{i=1}^{n} b_i^2}},$$

wobei $a_i$ die Intensitätswerte der Bildpunkte der Ausgangsbildausschnitte (A) und $b_i$ die Intensitätswerte der Bildpunkte der durch die Verschiebungsvektoren (3) bestimmten Bildausschnitte des Masterbildes (1) sind und dabei das Qualifikationsmaß

$$Q_{\text{NCC}}(A) = (1 - c_{\max}{}^2(A)) \sum_{i=1}^{n} a_i^2$$

verwendet wird oder
- **dass** eine normierte Kreuzkorrelation mit zusätzlich auf Null normierten Mittelwerten vorgenommen wird gemäß der Formel

$$f_{\text{ZNCC}}(A,B) = \frac{\sum_{i=1}^{n} (a_i - \overline{a})(b_i - \overline{b})}{\sqrt{\sum_{i=1}^{n} (a_i - \overline{a})^2 \sum_{i=1}^{n} (b_i - \overline{b})^2}},$$

wobei $a_i$ die Intensitätswerte der Bildpunkte der Ausgangsbildausschnitte (A) und $b_i$ die Intensitätswerte der Bildpunkte der untersuchten bzw. durch die Verschiebungsvektoren (3) bestimmten Bildausschnitte des Masterbildes (1) sind und dabei das Qualifikationsmaß

$$Q_{\text{ZNCC}}(A) = (1 - c_{\max}{}^2(A))\left( n \sum_{i=1}^{n} a_i^2 - \left( \sum_{i=1}^{n} a_i \right)^2 \right)$$

verwendet wird, wobei

$$\overline{a} = \frac{1}{n} \sum_{i=1}^{n} a_i \quad \text{und} \quad \overline{b} = \frac{1}{n} \sum_{i=1}^{n} b_i$$

die Mittelwerte der Intensitäten der Ausgangsbildausschnitte (A) und der durch die Verschiebungsvektoren (3) bestimmten Bildausschnitte des Masterbildes (1) darstellen.

7.  Verfahren nach einem der Ansprüche 1 bis 6, **dadurch gekennzeichnet,**

- **dass** von den Ausgangsbildausschnitten (A), einer, vorzugweise jener mit dem höchsten Qualifikationsmaßwert ausgewählt wird.

8.  Verfahren nach Anspruch 7, **dadurch gekennzeichnet,**

- **dass** ausgehend von dem ausgewählten Ausgangsbildausschnitt (A') ein Mindestabstand (MA) vorgegeben wird und alle innerhalb dieses Mindestabstandes (MA) gelegenen Ausgangsbildausschnitte (A) des Masterbildes (1) ausgeschieden werden, und
- **dass** von den verbliebenen Ausgangsbildausschnitten (A), jener mit dem höchsten Qualifikationsmaßwert ausgewählt wird und
- **dass** die beiden Schritte Ausscheiden und Auswählen fortgesetzt werden, bis eine vorgegebene Anzahl von Ausgangsbildausschnitten ausgewählt ist oder keine Ausgangsbildausschnitte mehr verbleiben oder keiner der verbliebenen Ausgangsbildausschnitte einen vorgegebenen Mindestqualifikationsmaßwert erreicht.

**9.** Verfahren nach Anspruch 8, **dadurch gekennzeichnet,**

- **dass** bei der Auswahl der als Passpunkt geeigneten Bildausschnitte des Masterbildes (1) für einen Ausgangsbildausschnitt (A) das Produkt aus dem Qualifikationsmaßwert und dem Abstand zu dem nächstliegenden, bereits ausgewählten Ausgangsbildausschnitt (A') des Masterbildes (1) gebildet wird und dieses Produkt für die Beurteilung des Bildausschnittes als Eignung als Passpunkt herangezogen wird.

**10.** Verfahren nach einem der Ansprüche 1 bis 9, **dadurch gekennzeichnet,**

- **dass** das Masterbild (1) in disjunkte, vorzugsweise quadratische Teilmengen zerlegt bzw. gegliedert wird und aus jeder Teilmenge nur derjenige Bildausschnitt als für einen Passpunkt geeigneter Bildausschnitt angesehen wird, der den höchsten Qualifikationsmaßwert besitzt.

**11.** Verfahren nach einem der Ansprüche 1 bis 10, **dadurch gekennzeichnet,**

- **dass** das Verfahren auf einem verkleinerten Masterbild (1) durchgeführt wird, wobei auch die untersuchten Ausgangsbildausschnitte (A) und die Verschiebungsvektoren um jeweils den gleichen Faktor reduziert werden, um den das Masterbild (1) selbst verkleinert wurde.

**12.** Verfahren nach Anspruch 11, **dadurch gekennzeichnet,**

- **dass** das Verfahren nur für jene Ausgangsbildausschnitte (A) des Masterbildes (1), die den ausgewählten verkleinerten Ausgangsbildausschnitten aus Anspruch 11 entsprechen, durchgeführt wird.

**Claims**

**1.** A method for determining image sections of a master image (1) usable as a control point, which is used as a template for the testing of objects,

a) wherein original image sections (A) are predefined in the master image (1),
b) wherein predefined displacement vectors (3) are assigned to the original image sections (A), with which said image sections are displaced over the master image (1) into a number of positions (5) corresponding in each case to a number of displacement vectors (3),
c) wherein for each original image section (A) in each of the positions (5) with a predefined correlation measure or error measure the correlation measure value or the error measure value is determined between the original image section (A) and the image section of the master image (1) located in this position (5), advantageously selected equal in size, and
d) wherein for each original image section (A) the maximum correlation measure value $C_{max}$ (A) or the minimum error value $C_{min}$ (A) is calculated with respect to the image area of the master image (1), over which the original image area (A) was displaced, **characterized in**
e) **that** a qualification measure value is defined by linkage

- of the minimum error value $C_{min}$ (A) or a value $1 - C_{max}(A)$ or $1 - C^2_{max}$ (A) derived from the maximum correlation measure value $C_{max}$ (A)
with an intensity value determined based on the intensity values of the image points of the respective original image section (A) of the master image and indicating the image intensity and

f) **that** the original image section (A) is regarded as a control point of the master image (1) suitable for the testing of objects, if the qualification measure value exceeds a predefined minimum value.

2. A method according to claim 1, **characterized in**

- **that** rectangular image sections with predefined height and breadth are selected as original image sections (A).

3. A method according to claim 1 or 2, **characterized in**

- **that** the displacement vectors (3), which are assigned to the individual initial image sections (A) or are applied to these, are equal.

4. A method according to one of claims 1 to 3, **characterized in**

- **that** the displacement vectors (3) have a predefined minimum length (4) and this minimum length (4) amounts to two pixels.

5. A method according to one of claims 1 to 4 **characterized in**

- **that** in the determination of the qualification measure value
- the minimum error value 1 - $C_{max}$ (A) or a value 1 - $C_{max}$ (A) or 1 - $C^2_{max}$ (A) derived from the maximum correlation measure value $C_{max}$ (A)
- is multiplied by the sum of the intensity values or the sum of the squared intensity values of the image points of the original image section of the master image.

6. A method according to one of claims 1 to 5, **characterized in**

- **that** a standardized cross-correlation is used as the correlation measure according to the formula

$$f_{NCC}(A, B) = \frac{\sum_{i=1}^{n} a_i b_i}{\sqrt{\sum_{i=1}^{n} a_i^2 \sum_{i=1}^{n} b_i^2}} \; ,$$

wherein $a_i$ are the intensity values of the image points of the original image sections (A) and $b_i$ the intensity values of the image points of the image sections of the master image (1) determined by the displacement vectors (3) and thereby the qualification measure

$$Q_{NCC}(A) = (1 - c_{max}^2(A)) \sum_{i=1}^{n} a_i^2$$

is used or
- **that** a standardized cross-correlation is carried out with mean values standardized in addition to zero according to the formula

$$f_{ZNCC}(A, B) = \frac{\sum_{i=1}^{n} (a_i - \overline{a})(b_i - \overline{b})}{\sqrt{\sum_{i=1}^{n} (a_i - \overline{a})^2 \sum_{i=1}^{n} (b_i - \overline{b})^2}} \; ,$$

wherein $a_i$ are the intensity values of the image points of the original image sections (A) and $b_i$ are the intensity values of the image points of the image sections of the master image (1) examined or determined by the displacement vectors (3) and thereby the qualification measure

$$Q_{ZNCC}(A) = (1 - c_{max}^2(A))\left(n\sum_{i=1}^{n} a_i^2 - \left(\sum_{i=1}^{n} a_i\right)^2\right)$$

is used, wherein

$$\bar{a} = \frac{1}{n}\sum_{i=1}^{n} a_i \quad \text{and} \quad \bar{b} = \frac{1}{n}\sum_{i=1}^{n} b_i$$

constitute the means values of the intensities of the original image sections (A) and the image sections of the master image (1) determined by the displacement vectors (3).

7.  A method according to one of claims 1 to 6, **characterized in**

    - **that** from the original image sections (A), one is selected preferably the one with the highest qualification measure value.

8.  A method according to claim 7, **characterized in**

    - **that** starting from the selected original image section (A') a minimum distance (MA) is predefined and all original image sections (A) of the master image (1) located within this minimum distance (MA) are eliminated, and
    - **that** from the remaining original image sections (A) the one with the highest qualification measure value is selected and
    - **that** the two steps of elimination and selection are continued, until a predefined number of original image sections is selected or no further original image sections remain or none of the remaining original image sections achieves a predefined minimum qualification measure value.

9.  A method according to claim 8, **characterized in**

    - **that** with the selection of the image sections of the master image (1) suitable as a control point for an original image section (A) the product is formed from the qualification measure value and the distance to the next closest, already selected original image section (A') of the master image (1) and this product is used for the evaluation of the image section for suitability as a control point.

10. A method according to one of claims 1 to 9, **characterized in**

    - **that** the master image (1) is divided or organized into disjointed, preferably square partial quantities and from each partial quantity only that image section is regarded as an image section suitable for a control point, which has the highest qualification measure value.

11. A method according to one of claims 1 to 10, **characterized in**

    - **that** the method is carried out on a reduced master image (1), wherein the examined original image sections (A) and the displacement vectors are also each reduced by the same factor, by which the master image was itself reduced.

12. A method according to claim 11, **characterized in**

    - **that** the method is carried out only for those original image sections (A) of the master image (1), which correspond to the selected reduced original image sections from claim 11.

**Revendications**

1. Procédé pour la détermination de sections d'image pouvant être utilisées en tant que points de contrôle, d'une image maîtresse (1) qui est utilisée en tant que modèle lors du contrôle d'objets,

   a) des sections d'image de départ (A) étant prédéfinies dans l'image maîtresse (1),
   b) des vecteurs de déplacement prédéfinis (3), à l'aide desquels ces sections d'image sont déplacées, sur l'image maîtresse (1), sur un certain nombre, correspondant au nombre des vecteurs de déplacement (3), de positions (5), étant affectés aux sections d'image de départ (A),
   c) dans lequel, pour chaque section d'image de départ (A), sur chacune des positions (5), avec une mesure de corrélation ou une mesure d'erreur prédéfinie, on détermine la valeur de la mesure de corrélation ou la valeur de la mesure d'erreur entre la section d'image de départ (A) et la section d'image de l'image maîtresse (1), se trouvant sur cette position (5), et avantageusement choisie de la même taille,
   d) dans lequel, pour chaque section d'image de départ (A), on calcule la valeur de mesure de corrélation maximale $c_{max}(A)$ ou la valeur d'erreur minimale $c_{min}(A)$, concernant les domaines d'image de l'image maîtresse (1) sur lesquels a été déplacé le domaine d'image de départ (A),
   **caractérisé**
   e) **en ce qu'**on définit une valeur de mesure de qualification par le couplage

   - de la valeur d'erreur minimale $c_{min}(A)$ ou d'une valeur $1-c_{max}(A)$ ou $1-c^2_{max}(A)$ qui dérive de la valeur de mesure de corrélation maximale $c_{max}(A)$
   à une valeur d'intensité, déterminée sur la base des valeurs d'intensité des points image de la section d'image de départ appropriée (A) de l'image maîtresse, et indiquant l'intensité de l'image, et

   f) **en ce que** la section d'image de départ (A) est considérée comme un point de contrôle, convenant au contrôle d'objets, de l'image maîtresse (1), quand la valeur de mesure de qualification dépasse une valeur minimale prédéfinie.

2. Procédé selon la revendication 1, **caractérisé en ce qu'**on choisit en tant que sections d'image de départ (A) des sections d'image rectangulaires ayant une hauteur et une largeur prédéfinies.

3. Procédé selon la revendication 1 ou 2, **caractérisé en ce que** les vecteurs de déplacement (3) qui sont affectés aux différentes sections d'image de départ (A) ou sont utilisés sur ces dernières, sont égaux.

4. Procédé selon l'une des revendications 1 à 3, **caractérisé en ce que** les vecteurs de déplacement (3) ont une longueur minimale prédéfinie (4), et que cette longueur minimale (4) comprend deux pixels.

5. Procédé selon l'une des revendications 1 à 4, **caractérisé en ce que**, lors de la détermination de la valeur de mesure de qualification, on multiplie la valeur d'erreur minimale $1-c_{max}(A)$, ou une valeur $1-c_{max}(A)$ ou $1-c^2_{max}(A)$, qui dérive de la valeur de mesure de corrélation maximale $c_{max}(A)$, par la somme des valeurs d'intensité ou par la somme des valeurs d'intensité élevées au carré des points images de la section d'image de départ de l'image maîtresse.

6. Procédé selon l'une des revendications 1 à 5, **caractérisé**

   - **en ce qu'**on utilise en tant que mesure de corrélation une corrélation croisée normée, selon la formule

$$f_{\text{NCC}}(A, B) = \frac{\sum_{i=1}^{n} a_i b_i}{\sqrt{\sum_{i=1}^{n} a_i^2 \sum_{i=1}^{n} b_i^2}} \, ,$$

dans laquelle $a_i$ représente les valeurs d'intensité des points images des sections d'image de départ (A) et $b_i$ les valeurs d'intensité des points images des sections d'image, déterminées par les vecteurs de déplacement (3), de l'image maîtresse (1), et on utilise alors la mesure de qualification

$$Q_{\text{NCC}}(A) = (1 - c_{\max}{}^2(A)) \sum_{i=1}^{n} a_i^2$$

ou
- **en ce qu'**on procède à une corrélation croisée normée avec en outre des valeurs moyennes normées à zéro, selon la formule

$$f_{\text{ZNCC}}(A, B) = \frac{\sum_{i=1}^{n} (a_i - \overline{a})(b_i - \overline{b})}{\sqrt{\sum_{i=1}^{n} (a_i - \overline{a})^2 \sum_{i=1}^{n} (b_i - \overline{b})^2}} \, ,$$

où $a_i$ représente les valeurs d'intensité des points images des sections d'image de départ (A) et $b_i$ les valeurs d'intensité des points images des sections d'image étudiées, ou déterminées par les vecteurs de déplacement (3), de l'image maîtresse (1), et on utilise alors la mesure de qualification

$$Q_{\text{ZNCC}}(A) = (1 - c_{\max}{}^2(A)) \left( n \sum_{i=1}^{n} a_i^2 - \left( \sum_{i=1}^{n} a_i \right)^2 \right)$$

ou

$$\overline{a} = \frac{1}{n} \sum_{i=1}^{n} a_i \quad \text{et} \quad \overline{b} = \frac{1}{n} \sum_{i=1}^{n} b_i$$

représentent les valeurs moyennes des intensités des sections d'image de départ (A) et des sections d'image, déterminées par les vecteurs de déplacement (3), de l'image maîtresse (1).

7. Procédé selon l'une des revendications 1 à 6, **caractérisé en ce qu'**on choisit parmi les sections d'image de départ (A) une telle section, de préférence celle ayant la valeur de mesure de qualification la plus élevée.

8. Procédé selon la revendication 7, **caractérisé**

  - **en ce que**, en partant de la section d'image de départ sélectionnée (A'), on prédéfinit un écart minimal (MA), et on élimine toutes les sections d'image de départ (A) de l'image maîtresse (1) se trouvant à l'intérieur de cet écart minimal (MA), et
  - **en ce que**, parmi les sections d'image de départ restantes (A), on choisit celle qui a la valeur de mesure de qualification la plus élevée,
  - **en ce qu'**on poursuit les deux étapes d'élimination et de sélection, jusqu'à ce qu'un nombre prédéfini de sections d'image de départ soit sélectionné, ou qu'il ne reste plus de sections d'image de départ, ou qu'aucune des sections d'image de départ restantes n'ait atteint une valeur de mesure de qualification minimale prédéfinie.

9. Procédé selon la revendication 8, **caractérisé en ce que**, lors de la sélection des sections d'image de l'image maîtresse (1) convenant en tant que points de contrôle, on forme, pour une section d'image de départ (A), le produit de la valeur de mesure de qualification et de l'écart avec la section d'image de départ (A') de l'image maîtresse (1), la plus proche et déjà sélectionnée, et on fait appel à ce produit pour évaluer si la section d'image convient en tant que point de contrôle.

10. Procédé selon l'une des revendications 1 à 9, **caractérisé en ce que** l'image maîtresse (1) est décomposée ou individualisée en quantités partielles disjointes, de préférence carrées, et que, dans cette quantité partielle, on ne considère comme étant une section d'image convenant à un point de contrôle que la section d'image qui possède la valeur de mesure de qualification la plus élevée.

11. Procédé selon l'une des revendications 1 à 10, **caractérisé en ce que** le procédé est mis en oeuvre sur une image maîtresse (1) réduite, auquel cas les sections d'image de départ étudiées (A) et les vecteurs de déplacement sont eux aussi réduits du même facteur que celui dont a été réduite l'image maîtresse (1).

12. Procédé selon la revendication 11, **caractérisé en ce que** le procédé n'est mis en oeuvre que pour les sections d'image de départ (A) de l'image maîtresse (1) qui correspondent aux sections d'image de départ réduites sélectionnées de la revendication 11.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0128820 A